# EUROPEAN PATENT APPLICATION

(11) **EP 1 731 039 A1**
(43) Date of publication of application: **13.12.2006**
(21) Application number: 06252933.4
(22) Date of filing: 06.06.2006
(51) Int. Cl.: A23G 9/04, A23G 9/28

(54) **Apparatus and method for dispensing frozen carbonated beverages**

(30) Priority: 06.06.2005 GB 0511455
(71) Applicant: IMI CORNELIUS (UK) LIMITED, Alcester Warwickshire B49 6EU (GB)
(72) Inventor: Moulder, Steven, Redditch Worcestershire B97 5HB (GB); Whittington, Ian Thomas Richard, Stratford-upon-Avon WarwickshireCV37 6DJ (GB); Davis, Terrence Robert, Redditch Worcestershire B97 5XS (GB)
(74) Representative: Wightman, David Alexander

(57) **Abstract**

Apparatus for dispensing a frozen carbonated beverage has a freeze chamber 31 in which the beverage is frozen and a pressure sensor 34 for monitoring the pressure in the freeze chamber 31 for controlling the addition of unfrozen beverage to the freeze chamber to maintain the level (volume) of beverage in the freeze chamber.

## Description

This invention relates to an apparatus and method for dispensing a frozen carbonated beverage.

The invention has application to dispense of both alcoholic and non-alcoholic frozen carbonated beverages. For convenience, the invention is described hereinafter with reference to dispense of frozen carbonated beverages formed by a combination of carbonated water and a syrup. It will be understood however that the invention is not limited to such application and dispense of other types of beverages is included within the scope of the invention.

Apparatus for producing frozen carbonated beverages from the partial freezing of a combination of carbonated water and syrup to produce a so-called "slush" beverage is well known, see for example US Patents 3608779 and 3460713. As used herein, the term "frozen" is used to describe beverages of this type and includes terms such as "semi-frozen".

There are many types of apparatus for producing frozen carbonated beverages. In the known apparatus, the beverage may be mixed in the apparatus and converted to the desired frozen state in a freeze chamber for dispense via a tap connected to the freeze chamber. Such apparatus can be bulky and require a large amount of floor space.

It is an object of this invention to provide an improved apparatus and method for dispensing frozen carbonated beverages.

According to one aspect of the present invention, there is provided apparatus for dispensing a frozen carbonated beverage comprising a freeze chamber in which the beverage is frozen wherein the addition of beverage to the freeze chamber is controlled in response to the pressure in the freeze chamber.

The pressure in the freeze chamber is related to the level (volume) of frozen and/or unfrozen carbonated beverage in the freeze chamber and control of the addition of unfrozen beverage to the freeze chamber in response to the pressure provides a simple and effective method of controlling the beverage level in the freeze chamber.

In use, as frozen carbonated beverage is dispensed, the pressure in the freeze chamber falls until a pre-determined lower pressure is detected at which beverage is added to the freeze chamber until a pre-determined upper pressure is detected at which the addition of beverage is stopped. The difference between the upper and lower pressures may be such that several frozen carbonated beverages may be dispensed before beverage is added to the freeze chamber.

Preferably, beverage is added to the freeze chamber at a rate that matches the cooling rate of the beverage within the freeze chamber so that unfrozen beverage added to the freeze chamber is rapidly frozen and does not significantly alter the viscosity (consistency) of the frozen carbonated beverage within the freeze chamber. In this way, frozen carbonated beverage having the desired viscosity (consistency) may be dispensed while adding unfrozen beverage to the freeze chamber.

Preferably, the beverage is carbonated within the freeze chamber. In a preferred arrangement, the beverage and carbonating gas are added simultaneously to the freeze chamber. In this arrangement, the carbonating gas may be introduced to the beverage line upstream of the freeze chamber so that the beveragelcarbonating gas mixture is introduced simultaneously into the freeze chamber. Some in-line carbonation of the beverage may then occur in the beverage line with the carbonation process being completed within the freeze chamber.

Preferably, the freeze chamber is maintained at a temperature below the freezing temperature of the beverage during a freeze mode of operation, for example below 0°C for a. beverage containing water and syrup. In this way, carbonation may be carried out below the freezing point of the beverage within the freeze chamber.

Preferably, the addition of beverage is controlled by a control unit in response to the pressure in the freeze chamber. Where the beverage is a mixture of two or more components, for example a diluent such as water and a concentrate such as syrup, the beverage components may be premixed for supply to the apparatus. More preferably, however, the apparatus is connectable to supplies of the components and is arranged to mix the components in-line for addition to the freeze chamber.

In this arrangement, the control unit includes means for mixing the components in the required ratio for the beverage to be produced. Such means preferably comprises a ratio pump comprising a separate pump unit for each component and an actuator for simultaneously operating the pump units to deliver the components to a line for mixing and delivering the components to the freeze chamber in the correct ratio.

The ratio pump may be adjustable to vary the amounts of the components for achieving the desired ratio of components for the beverage to be produced and/or the flow rate of the combined components for achieving the desired fill rate in the freeze chamber.

According to another aspect of the present invention, there is provided a method of dispensing a frozen carbonated beverage comprising providing a freeze chamber in which the beverage is frozen for dispense and controlling the addition of beverage to the freeze chamber in response to the pressure in the freeze chamber.

Preferably, the beverage is carbonated in the freeze chamber.

According to yet another aspect of the present invention, there is provided apparatus for dispensing a frozen carbonated beverage comprising a freeze chamber in which the beverage is carbonated and frozen.

Carbonating the beverage in the freeze chamber avoids the provision of a separate carbonator to carbonate the beverage.

According to another aspect of the present invention, there is provided a method of dispensing a frozen carbonated beverage comprising providing a freeze chamber in which the beverage is carbonated and frozen for dispense.

According to a further aspect of the present invention, there is provided apparatus for dispensing a carbonated beverage comprising a freeze chamber in which the beverage is frozen, wherein the beverage comprises a mixture of at least two components and a ratio pump is provided for controlling addition of the components in the required ratio.

Preferably, the ratio pump comprises a separate pump unit for each component and means for simultaneously actuating the pump units to provide the components in the required ratio.

Preferably, the actuating means controls the pumping stroke to achieve a desired fill rate in the freeze chamber. For example, the fill rate may be chosen to substantially match the cooling rate of the beverage in the freeze chamber.

According to another aspect of the present invention, there is provided a method of dispensing a frozen carbonated beverage comprising providing a freeze chamber in which the beverage is frozen for dispense, and providing a ratio pump for adding beverage to the freeze chamber.

According to a still further aspect of the present invention, there is provided apparatus for dispensing a frozen carbonated beverage comprising a freeze chamber in which the beverage is frozen, a dispense tap or valve for dispensing frozen carbonated beverage and means for adding beverage to the freeze chamber at a rate that substantially matches the rate of cooling of beverage within the freeze chamber.

By matching the fill rate to the cooling rate, unfrozen beverage added to the freeze chamber is converted to frozen beverage in an efficient manner and does not significantly affect the viscosity (consistency/quality) of the frozen beverage in the freeze chamber.

According to another aspect of the present invention, there is provided a method of dispensing a frozen carbonated beverage comprising providing a freeze chamber in which the beverage is frozen for dispense, and controlling the addition of beverage to the freeze chamber so that the fill rate substantially matches the cooling rate of beverage within the freeze chamber.

According to yet another aspect of the present invention, there is provided apparatus for dispensing a frozen carbonated beverage comprising a freeze chamber in which the beverage is frozen, wherein beverage and carbonating gas are introduced to the freeze chamber in the same line.

By adding the beverage and carbonating gas to the freeze chamber in the same line, carbonation of the beverage within the freeze chamber is promoted so that the desired carbonation level can be achieved and carbonated beverage frozen in an efficient manner. Some pre-carbonation of the beverage in the supply line may also be effected thereby further enhancing the carbonation process.

According to another aspect of the present invention, there is provided a method of dispensing a frozen carbonated beverage comprising providing a freeze chamber in which the beverage is frozen for dispense, and adding the beverage and a carbonating gas to the freeze chamber at the same time.

According to yet another aspect of the present invention, there is provided a frozen carbonated beverage dispensed by the apparatus or method according to any of the preceding aspects of the invention.

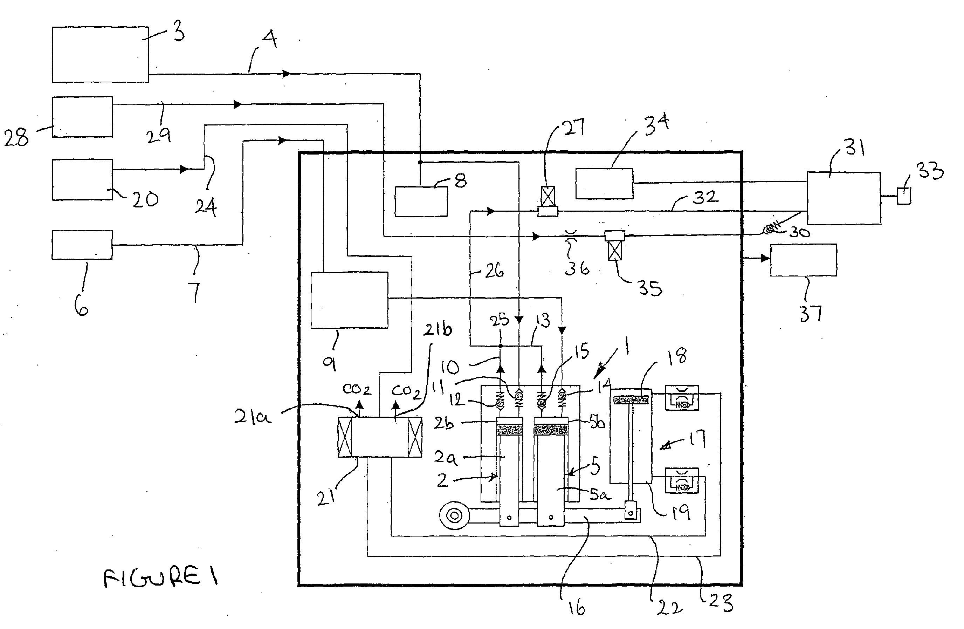

The invention will now be described in more detail, by way of example only, with reference to Figure 1 in the accompanying schematic drawing showing one embodiment of an apparatus for dispensing frozen carbonated beverages according to the invention.

As shown the apparatus has a ratio pump 1 having a syrup pump unit 2 connected to a source 3 of syrup via a syrup line 4 and a water pump unit 5 connected to a source 6 of water via a water line 7. In this embodiment the source 3 of syrup is a so-called "bag in box" container and the source 6 of water is the mains supply. It will be understood however that any other suitable sources of syrup and water may be employed.

A vacuum switch 8 is provided in the syrup line 4 to detect when the syrup source 3 is empty and provide a signal to an electronic control unit (not shown), for example a printed circuit board, to shut-down the ratio pump 1 until the syrup source 3 is replaced. A visual and/or audible warning signal may be provided to indicate that the syrup source 3 needs to be replaced. For example an LED light may be illuminated and/or a buzzer may be activated.

A regulator 9 is provided in the water line 7 to reduce the water pressure so that a constant supply pressure is maintained. In this embodiment the regulator reduces the water pressure to 7 psi but it will be understood that other pressures can be employed. The reduced water pressure enables the apparatus to be used with different supply pressures and allows fluctuations in the supply pressure to be accommodated.

The syrup pump unit 2 comprises a piston 2a slidable in a cylinder 2b to draw syrup into the cylinder 2b through syrup line 4 (suction stroke) and expel syrup from the cylinder 2b through line 10 (pump stroke). Non-return valves 11,12 in the lines 4,10 control the flow to and from the cylinder 2b and ensure a pre-determined volume of syrup is expelled from the cylinder 2b for each complete stroke of the piston 2a (suction and pump strokes).

In like manner, the water pump unit 5 comprises a piston 5a slidable in a cylinder 5b to draw water into the cylinder 5b through water line 7 (suction stroke) and expel water from the cylinder 5b through line 13 (pump stroke). Non-return valves 14,15 in the lines 7,13 control the flow to and from the cylinder 5b and ensure a pre-determined volume of water is expelled from the cylinder 5b for each complete stroke of the piston 5a (suction and pump strokes).

The pistons 2a,5a are connected to a pivotally mounted lever 16 connected to an actuator 17 for simultaneously reciprocating the pistons 2a,5a in the cylinders 2b,5b. The pump units 2,5 are sized so that the ratio pump 1 simultaneously delivers known volumes of syrup and water to the lines 10,13 in a pre-determined ratio for the beverage to be produced.

The actuator 17 comprises a piston/cylinder unit having a piston 18 slidable in a cylinder 19 in response to a pressure differential created across the piston 18 by simultaneously connecting opposite ends of the cylinder 19 to a source 20 of gas under pressure and atmosphere respectively and reversing the connections at the end of each stroke of the piston 18 by means of a valve 21.

As shown, fluid lines 22,23 connect opposite ends of the cylinder 19 to one side of the valve 21 and fluid line 24 connects the source 20 of gas under pressure to the other side of the valve 21. The valve is operable to alternately connect lines 22,23 to line 24 and to exhaust ports 21a, 21b for reversing the pressure differential across the piston 18.

Sensors (not shown) may be arranged to detect the position of the piston 18 in the cylinder 19 and provide a signal to the electronic control. unit to switch the valve to reverse the connections at the end of each stroke. In this embodiment, the source of gas is carbon dioxide at 40 psi but it will be understood that any other pressure and/or any other gas or mixture of gases such as air may be employed. It will also be understood that the piston/cylinder unit may be replaced by any other suitable means for operating the ratio pump 1 such as an electric motor.

Downstream of the ratio pump 1, the syrup line 10 is joined to the water line 13 at a. T-connector 25 for mixing the syrup with the water to produce uncarbonated beverage that flows in line 26 from the T-connector 25 to an on/off solenoid valve 27. The solenoid valve 27 is connected to a freeze chamber 31 via line 32 for controlling the flow of the beverage to the freeze chamber 31.

A source 28 of carbonating gas is connected via line 29 to the beverage line 32 between the solenoid valve 27 and the freeze chamber 31, preferably close to where the beverage line 32 enters the freeze chamber 31. The beverage may be partially carbonated within line 32 and is rapidly carbonated to the desired level on entry to the freeze chamber 31.

An on/off solenoid valve 35 in gas line 29 controls the flow of gas to the freeze chamber 31 and a non-return valve 30 in gas line 29 downstream of the solenoid valve 35 prevents back-flow of gas and/or beverage from beverage line 32. In this embodiment, carbon dioxide at 28 psi is used and a flow restrictor 36 in the gas line 29 upstream of the solenoid valve 35 controls the gas flow to the freeze chamber 31 when the solenoid valve 35 is open. It will be understood that other gas pressures may be employed according to the operating requirements as described later.

The apparatus includes a refrigeration circuit (not shown) having an evaporator within the freeze chamber 31. The evaporator cools the carbonated beverage to form frozen carbonated beverage within the freeze chamber 31 and an agitator (not shown) such as an Archimedes screw is operable to circulate the frozen beverage within the freeze chamber 31 to maintain the desired viscosity (consistency) of the frozen beverage for dispense and prevent the frozen beverage forming a solid mass within the freeze chamber 31. Viscosity of the frozen carbonated beverage is measured by the torque on the Archimedes screw and freezing is controlled in response to the measured torque to maintain a desired viscosity.

In this embodiment, the temperature within the freeze chamber is maintained at approximately -3°C to -4°C and the low temperature also assists the carbonation process within the freeze chamber 31. It will be understood that the temperature in the freeze chamber 31 may be altered according to the freezing point of the carbonated beverage and/or the desired viscosity of the frozen carbonated beverage.

The freeze chamber 31 is constructed to withstand the elevated pressures arising within the chamber in use and is connected to a dispense tap 33 for dispensing frozen carbonated beverage into a cup or other suitable receptacle (not shown) placed under the tap 33. The other components of the apparatus are mounted in a casing with the appropriate adaptors for connection to the supply lines and having an outlet 37 for escape of carbon dioxide released by the valve 21 to atmosphere. The freeze chamber 31 may be mounted on the casing to provide a compact unit that can be sited on a shelf or counter top. Alternatively, the casing may be located remote from the freeze chamber 31.

In use, the pressure in the freeze chamber 31 will fall as frozen carbonated beverage is dispensed from the dispense tap 33. A pressure sensor 34 monitors the pressure in the freeze chamber 31 and provides a signal to the electronic control unit when the pressure reaches a pre-determined lower pressure to start the ratio pump 1. The pressure sensor 34 may be arranged to monitor the pressure at any point in the freeze chamber 31 but for practical reasons will usually monitor the gas pressure in the headspace above the beverage.

The electronic control unit monitors switches (not shown) controlling the suction and pumping strokes of the pump units 2,5. When the pumping stroke is detected, the electronic control unit opens the solenoid valves 27 and 35 to admit the beverage and carbon dioxide to the freeze chamber 31 and, when the suction stroke is detected, the electronic control unit closes the solenoid valve 27 and solenoid valve 35. Closing solenoid valve 27 prevents the water supply by-passing the non-return valves 14,15 of the pump unit 5 and flooding the freeze chamber 31. Closing the solenoid valve 35 prevents the carbon dioxide supply flooding the freeze chamber 31 when the solenoid valve 27 is closed.

The ratio pump 1 is operable to add the beverage to the freeze chamber 31 at a rate that substantially matches the rate of cooling of the beverage in the freeze chamber 31. In this way, the addition of unfrozen beverage does not have a significant effect on the viscosity (consistency) of the frozen beverage in the freeze chamber 31 and frozen carbonated beverage can be dispensed while re-filling the freeze chamber 31.

The ratio pump 1 is operable :to add the beverage to the freeze chamber 31 until the pressure sensor 34 detects a pre-determined upper pressure. At this point, the control unit stops the ratio pump 1 at the end of the suction stroke and closes the solenoid valves 27,35 so that the pump units 2,5 contain syrup and water ready for the next re-fill.

In this embodiment, the lower pressure is set at 26 psi and the upper pressure is set at 28 psi but it will be understood that these may be altered to suit the characteristics of the beverage to be dispensed. The pressure of the carbonating gas supply is above the lower pump cut-in pressure in the freeze chamber 31 and the flow restrictor 36 in gas line 32 controls the gas flow so that carbonating gas does not flood the freeze chamber when the solenoid valve 27 is opened to re-fill the freeze chamber 31.

The electronic control unit is programmed to switch the apparatus between the freeze mode of operation described above and a defrost mode of operation for carrying out a defrost cycle when the apparatus is not in use, for example overnight. During the de-frost mode the frozen beverage in the freeze chamber 31 is thawed and maintained at a temperature just above freezing, for example +2°C, until the apparatus switches back to the freeze mode of operation. In this way, the time to re-freeze the beverage after the de-frost cycle is reduced.

The electronic control unit is also programmed to carry out an auto-calibration cycle on initial installation and after the de-frost mode of operation before the apparatus switches to the freeze mode of operation.

In the auto-calibration cycle, the beverage level in the freeze chamber 31 is checked via a level sensor (not shown) arranged to monitor the beverage level and, if necessary, beverage is added to the freeze chamber 31 to provide a pre-determined beverage level. In addition, the pressure in the freeze chamber 31 is checked via the pressure sensor 34 and, if necessary, carbonating gas is added to the freeze chamber 31 or vented from the freeze cylinder 31 via a release valve (not shown) to stabilise the pressure in the freeze cylinder 31 to a pre-determined pressure.

In this way, the beverage level and pressure in the freeze chamber 31 are controlled to provide the same starting conditions when the apparatus switches to the freeze mode of operation. During the auto-calibration cycle, the control unit controls operation of the ratio pump 1 to allow the freeze chamber 31 to be rapidly filled to the pre-determined level as determined by the level sensor (not shown) monitoring the beverage level in the freeze chamber 31. The electronic control unit can be programmed with the times for the automatic de-frost mode of operation. The auto-calibration cycle may be carried out after each defrost mode of operation or at any convenient intervals.

It will be understood that the invention is not limited to the embodiment above-described and that various modifications and improvements can be made without departing from the scope of the invention. For example, the pressure sensor may detect the pressure in the beverage supply line 32 downstream of the solenoid valve 27. The carbonating gas supply may be connected to the beverage supply line 26 upstream of the solenoid valve 27.

The invention may be employed for dispense of non-alcoholic frozen carbonated beverages such as lemonade, colas, and alcoholic frozen carbonated beverages such as granita, beer, lager, cider. Other frozen carbonated beverages that can be dispensed will be apparent to those skilled in the art. The invention may also be employed for the dispense of frozen beverages containing a gas or mixture of gases other than carbon dioxide, for example nitrogen and the terms "carbonated beverage" and "carbonating gas" are to be construed accordingly.

The beverage may comprise a mixture of two or more components. Where more than two components are to be mixed in a desired ratio, separate pump units may be provided for each component and arranged for simultaneous operation. Alternatively or additionally, a dosing unit may be provided to add a component such as a flavour to the beverage either in the supply to the freeze chamber or in the freeze chamber.

The apparatus may comprise more than one freeze chamber and a control system operable via a user interface for dispensing a selected frozen beverage or combination of frozen beverages. A combination of frozen beverages may be dispensed simultaneously or successively to produce different effects in the dispensed beverage. For example, we may dispense a frozen carbonated beverage having alternate layers of frozen material with different flavours, colours, tastes or smells. We may dispense a frozen carbonated beverage with a frozen non-carbonated beverage and/or with an unfrozen carbonated or non-carbonated beverage containing the same or different material. Other types of beverage that can be dispensed will be apparent to those skilled in the art.

## Claims

1. Apparatus for dispensing a frozen carbonated beverage comprising a freeze chamber in which the beverage is frozen wherein the addition of beverage to the freeze chamber is controlled in response to the pressure in the freeze chamber.

2. Apparatus according to claim 1 wherein, addition of beverage is controlled between a pro-determined lower pressure and a pre-determined upper pressure.

3. Apparatus according to claim 1 or claim 2 wherein, addition of beverage is controlled to match the cooling rate of the beverage within the freeze chamber.

4. Apparatus according to any preceding claim wherein, the beverage is carbonated within the freeze chamber.

5. Apparatus according to claim 4 wherein, the beverage and carbonating gas are added simultaneously to the freeze chamber.

6. Apparatus according to claim 5 wherein, the carbonating gas is introduced to the beverage upstream of the freeze cylinder so that the beverage/carbonating gas mixture is introduced simultaneously into the freeze chamber.

7. Apparatus according to any preceding claim wherein, the freeze chamber is maintained at a temperature below the freezing temperature of the beverage during a freeze mode of operation.

8. Apparatus according to any preceding claim wherein, a control unit is provided for controlling addition of beverage to the freeze chamber in response to the pressure in the freeze chamber.

9. Apparatus according to claim 8 wherein, the control unit includes means for mixing beverage components in a required ratio for the beverage to be produced.

10. Apparatus according to claim 9 wherein, the mixing means comprises a ratio pump comprising a separate pump unit for each beverage component and an actuator for simultaneously operating the pump units to deliver the beverage components to the freeze chamber in the correct ratio.

11. Apparatus according to claim 10 wherein, the ratio pump is adjustable to vary the amounts of the beverage components for achieving the desired ratio of components for the beverage to be produced and/or the flow rate of the combined components for achieving a desired fill rate in the freeze chamber.

12. A method of dispensing a frozen carbonated beverage comprising providing a freeze chamber in which the beverage is frozen for dispense and controlling the addition of beverage to the freeze chamber in response to the pressure in the freeze chamber.

13. A method according to claim 12 wherein, the beverage is carbonated in the freeze chamber.

14. A method according to claim 13 wherein, carbonating gas and beverage are added simultaneously to the freeze chamber.

15. A method according to any of claims 12 to 14 wherein, the addition of beverage to the freeze chamber is controlled between a lower pressure and an upper pressure.

16. A method according to any of claims 12 to 15 wherein, addition of beverage is controlled to match the cooling rate of the beverage within the freeze chamber.
